# EUROPÄISCHE PATENTSCHRIFT

(11) **EP 0 688 712 B1**
(45) Veröffentlichungstag und Bekanntmachung des Hinweises auf die Patenterteilung: **27.08.1997**
(21) Anmeldenummer: 95109394.7
(22) Anmeldetag: 17.06.1995
(51) Int. Cl.: B62D 11/08, B60T 13/68

(54) **Bremsanlage für ein Motorfahrzeug**
Brake system for a motor vehicle
Système de freinage pour un véhicule à moteur

(30) Priorität: 22.06.1994 DE 4421831
(43) Veröffentlichungstag der Anmeldung: 27.12.1995
(73) Patentinhaber: DEERE & COMPANY, Moline, Illinois 61265 (US)
(72) Erfinder: Thompson, Graham, D-68199 Mannheim (DE)
(74) Vertreter: Feldmann, Bernhard

(56) Entgegenhaltungen:
- EP-A- 0 275 985
- EP-A- 0 295 396
- DE-C- 3 625 025
- FR-A- 2 523 063
- PATENT ABSTRACTS OF JAPAN vol. 012 no. 061 (M-671) ,24.Februar 1988 & JP-A-62 206128 (KOMATSU LTD) 10.September 1987,

## Beschreibung

Die Erfindung betrifft eine Bremsanlage für ein Motorfahrzeug zur wahlweisen Einzel- oder Mehrradbremsung gemäß dem Oberbegriff des Patentanspruchs 1.

Um das Fahren durch enge Kurven zu erleichtern, ist es insbesondere bei landwirtschaftlichen Fahrzeugen, wie Ackerschleppern, aus der EP-A-0 084 687 bekannt, zwei unabhängig voneinander bedienbare Bremspedale vorzusehen, durch die jeweils ein gesonderter Bremszylinder betätigbar ist, um beim Bremsen den erforderlichen Bremsdruck für die linken bzw. rechten Betriebsbremsen aufzubringen. Wird nur ein Bremspedal niedergedrückt, so werden nur die zugehörigen linken bzw. rechten Fahrzeugräder abgebremst, wodurch engere Radien durchfahren werden können. Für den normalen Fahrbetrieb werden die beiden Bremspedale mechanisch durch einen Riegel miteinander verbunden, so daß auch bei Betätigung nur eines Pedals die Räder beider Fahrzeugseiten abgebremst werden. Wegen der Verwendung von zwei Bremspedalen, dem Riegel und zwei Bremszylindern erfordert die bekannte Bremsanlage relativ viele kostspielige Teile und ist aufwendig. Ferner ist die Betätigung des Riegels umständlich und zeitraubend. Verriegelt die Bedienungsperson die beiden Pedale versehentlich nicht bei Straßenfahrt, so können durch Einzelpedalbetätigung gefährliche Fahrsituationen auftreten.

Durch die DE-A-2 052 401 ist eine Bremsanlage bekannt geworden, bei der lediglich ein Bremspedal und ein durch dieses betätigbarer Bremszylinder vorgesehen ist. Die hydraulische Verbindung zwischen dem Bremszylinder und den Bremsen der linken bzw. der rechten Räder wird durch ein elektromagnetisch umschaltbares Wegeventil gesteuert. Das Trittstück des Bremspedals ist aus einer Mittelstellung um eine in Längsrichtung des Pedalhebels verlaufende Achse nach beiden Seiten kippbar. Beidseits des Trittstücks sind elektrische Kontakte angeordnet, die jeweils in Kippstellung des Trittstücks über das Wegeventil die Bremsen auf der einen oder der anderen Fahrzeugseite von dem Bremszylinder trennen. Die Bedienung des Bremspedals erfordert von der Bedienungsperson jedoch einiges Geschick. Es kann ferner nicht ausgeschlossen werden, daß bei einer Voll- oder Notbremsung das Bremspedal versehentlich verkippt wird, so daß auf gefährliche Weise lediglich eine Fahrzeugseite abgebremst wird.

Aus der DE-C-36 25 025 geht eine hydraulische Lenkbremsanlage für Fahrzeuge der eingangs genannten Art hervor, bei der eine Ventilanordnung in einem Normalzustand eine Hauptzylinderanordnung mit Bremszylinderanordnungen auf beiden Fahrzeugseiten eines Fahrzeugs verbindet. In vorwählbaren Sperrzuständen trennt die Ventilanordnung wahlweise die Bremszylinderanordnung auf einer oder der anderen Fahrzeugseite von der Hauptzylinderanordnung. Die Ventilanordnung enthält mehrere Elektroventile, die durch ein Steuergerät und einem diesem zugeordneten Vorwählhebel betätigbar sind. Der Vorwählhebel steht normalerweise in einer Mittelstellung, in der die Elektroventile offen sind, so daß eine Bremsung mit allen Fahrzeugbremsen erfolgt. Wenn der Fahrer den Vorwählhebel nach rechts oder nach links stellt, werden die Elektroventile auf der entsprechenden Fahrzeugseite geschlossen, so daß bei einer einsetzenden Bremsung nur die rechten oder linken Fahrzeugbremsen betätigt werden. Unter bestimmten Fahrbedingungen, wie Fahrzeuggeschwindigkeit, Lenkeinschlag und dergleichen läßt ein Steuergerät die Ventilanordnung in ihren Normalzustand zurückkehren. Die Bedienungsperson kann bei dieser Lenkbremsanlage übersehen, daß die Elektroventile einer Fahrzeugseite geschlossen sind, so daß bei der nächsten Bremsbetätigung lediglich die Bremsen einer Fahrzeugseite betätigt werden. Dies kann zu gefährlichen Bremssituationen führen, sofern eine Lenkbremsung nicht beabsichtigt war.

Die der Erfindung zugrunde liegende Aufgabe wird darin gesehen, eine Bremsanlage der eingangs genannten Art anzugeben, durch die die genannten Probleme überwunden werden, die möglichst wenig mechanische Bauteile enthält, einen zuverlässigen, sicheren Bremsbetrieb ermöglicht, einfach und ergonomisch handhabbar ist und sich in vorhandene Fahrzeugstrukturen einfach integrieren läßt.

Die Aufgabe wird ausgehend von dem Oberbegriff des Patentanspruches 1 durch dessen kennzeichnende Merkmale gelöst. Weitere vorteilhafte Ausgestaltungen und Weiterbildungen der Erfindung gehen aus den Unteransprüchen hervor.

Bei der erfindungsgemäßen Lösung ist lediglich ein Bremspedal mit einem Bremszylinder erforderlich, der gegebenenfalls gegenüber einem in einer konventionellen Bremsanlage verwendeten Bremszylinder vergrößert ausgebildet ist. Bei Betätigung des einen Bremspedals wird Bremsflüssigkeit durch lediglich eine Bremsleitung zu einer elektromagnetisch betätigbaren Ventilanordnung geleitet, die eine Druckverteilung auf die linken und/oder rechten Bremsen vornimmt. Die Ventilanordnung ist zweckmäßigerweise so ausgebildet, daß sie in Ruhestellung, d. h. bei fehlendem elektrischen Signal, die Verbindung zwischen dem Bremszylinder und den Bremsen offenhält, so daß beim Niederdrücken des Bremspedals zuverlässig alle Bremsen betätigt werden und ein gleichmäßiges Abbremsen des Fahrzeugs möglich ist. Viele Fahrzeuge enthalten auf jeder Fahrzeugseite je ein durch das Bremspedal abbremsbares Rad. Die Erfindung ist jedoch auch dort anwendbar, wo mehrere Räder auf jeder Fahrzeugseite durch Betätigung des Bremspedals abbremsbar sind.

Die Ventilanordnung wird durch eine elektrische Schaltungsvorrichtung gesteuert, die einen von Hand betätigbaren, federzentrierten Wippschalter enthält, der aus seiner mittleren Stellung gegen eine Federkraft vorübergehend in zwei Auslenkstellungen gebracht werden kann. Jeder Auslenkstellung ist ein Magnetventil der Ventilanordnung zugeordnet, das sich in der Auslenkstellung aktivieren läßt, so daß die Bremsflüssigkeitsleitung zu der Bremse einer Fahrzeugseite gesperrt wird. Infolgedessen wird bei einer Bremspedalbetätigung lediglich die Bremse auf der anderen Fahrzeugseite wirksam. Befindet sich der Wippschalter in seiner mittleren Stellung, so sind die Bremsleitungen zu allen Betriebsbremsen offen, und es werden bei einer Bremspedalbetätigung die Betriebsbremsen beider Fahrzeugseiten und gegebenenfalls auch die eines Anhängers wirksam.

Durch den Wippschalter läßt sich ein Bremsmodus, bei dem durch eine Bremspedalbetätigung Bremsflüssigkeit von dem Bremszylinder an beide Bremsen und gegebenenfalls an einen Anhänger geliefert wird, sowie ein Lenkmodus einstellen, bei dem ein elektromagnetisch betätigtes Ventil der Ventilanordnung die Bremsleitung zu den Bremsen einer Fahrzeugseite unterbricht und nur die Bremsen der anderen Fahrzeugseite betätigbar sind.

Gemäß der Erfindung ist ein durch das Bremspedal auslösbarer Bremspedalschalter vorgesehen, der anspricht, sobald das Bremspedal über einen vorgebbaren Stellweg hinaus niedergedrückt ist. Der Bremspedalschalter steuert eine elektrische Schaltungsvorrichtung. Wird der Bremspedalschalter zu einem Zeitpunkt gleichzeitig mit dem Wippschalter betätigt, so bleibt die betroffene linke oder rechte Bremse unabhängig von der nachfolgenden Wippschalterstellung so lange unwirksam, bis das Bremspedal losgelassen wird. Der einmal eingestellte Lenkmodus wird damit so lange aufrecht erhalten, wie das Bremspedal wenigstens teilweise niedergedrückt ist, so daß der Bremspedalschalter anspricht. Sobald das Bremspedal losgelassen wird und in seine Ruhestellung zurückkehrt, wird der Lenkmodus abgebrochen und kann nur durch erneutes Betätigen des Wippschalters sowie des Bremspedals wieder aktiviert werden. Vorteilhaft ist hierbei, daß der Lenkmodus nach einer kurzzeitigen Betätigung des Wippschalters weiter aktiv bleibt, ohne daß eine Hand der Bedienungsperson an den Wippschalter gebunden ist. Die Hand ist frei für andere Aufgaben, beispielsweise für die Bedienung der Zapfwelle oder von Zusatzgeräten. Da der Wippschalter nach einer Betätigung immer automatisch in seine mittlere Ruhelage zurückkehrt und da der Lenkmodus nur so lange aktiv bleibt, wie das Bremspedal betätigt wird, beugt die Bremslage Fehlbedienungen vor. Es ist nämlich nicht erforderlich, daß die Bedienungsperson eine Umschaltung vom Lenkmodus zum Bremsmodus vornimmt.

Bei der erfindungsgemäßen Bremsanlage können gegenüber bisher üblichen Bremsanlagen mit zwei Bremspedalen Bauteile eingespart werden, da lediglich ein Bremspedal, ein Bremshauptzylinder, eine Bremsleitung und keine Bremspedalverriegelung erforderlich sind. Sicherheitsprobleme, die auftreten, wenn die Bedienungsperson vergessen hat, die Verriegelung zwischen den beiden Bremspedalen einzulegen, werden vermieden. Wegen der Verwendung lediglich eines Bremspedals steht mehr Platz am Kabinenboden zur Verfügung, so daß der Kabinenzugang durch die rechte Kabinentür verbessert wird. Wird an das Fahrzeug ein Anhänger angehängt, dessen Bremsen durch das Bremssystem des Fahrzeuges betätigt werden, so läßt sich die erfindungsgemäße Bremsanlage ohne Schwierigkeiten derart ausbilden, daß der Anhänger lediglich beim Bremsmodus, nicht jedoch beim Lenkmodus abbremsbar ist. Es ist ferner möglich den Kippschalter an einer ergonomisch günstigen Stelle in der Fahrzeugkabine anzuordnen. Er kann beispielsweise im Bereich der Bedienungskonsole, die sich rechts neben dem Fahrersitz befindet und auf der sich die Bedienungselemente der Hubwellensteuerung und der Steuerung für Zusatzgeräte befinden, montiert werden. Aus ergonomischen Gründen kann es auch zweckmäßig sein, den Kippschalter am Bedienungshebel eines Steuerhebels, der beispielsweise der Einstellung des Fahrzeuggetriebes dient, oder im Bereich der Armlehne des Fahrersitzes anzuordnen. Zukunftsentwicklung mit einem Hauptsteuerhebel für das Fahrzeuggetriebe und mit Bordcomputern oder komplexen Systemen können leicht mit den erfindungsgemäßen Merkmalen versehen werden.

Gemäß einer vorteilhaften Ausgestaltung der Erfindung ist wenigstens ein Lenkwinkelsensor, der insbesondere bei Überschreiten eines vorgebbaren Lenkwinkels anspricht, sowie ein Lenkbremsenumschalter vorgesehen. Die Schaltungsvorrichtung verbindet bei eingeschaltetem Lenkbremsenumschalter immer dann lediglich die Bremsen einer Fahrzeugseite automatisch mit dem Bremszylinder, wenn ein vorgegebener Lenkwinkel überschritten ist. Durch den Lenkbremsenumschalter läßt sich damit ein automatischer Lenkmodus einschalten, der bei Überschreiten eines vorgebbaren linken oder rechten Lenkwinkels durch Bremsbetätigung ausgelöst wird. Als Mittel zur Signalsteuerung können Lenkdruckleitungssensoren oder eine Vorderachslenkwinkelmessung herangezogen werden. Auch diese Ausgestaltung ermöglicht einen automatischen Betrieb, bei dem die Hand der Bedienungsperson frei bleibt.

Es ist von Vorteil, einen Geschwindigkeitssensor vorzusehen. Dieser steuert die Schaltungsvorrichtung derart, daß bei Überschreiten einer vorgebbaren Fahrzeuggeschwindigkeit der Bremszylinder automatisch an alle Bremsen, gegebenenfalls einschließlich der Bremsen eines Anhängers, angeschlossen wird (Bremsmodus). Dieses Sicherheitsmerkmal gewährleistet, daß bei höheren Fahrgeschwindigkeiten, insbesondere bei Fahrten auf der Straße, der Lenkmodus immer ausgeschaltet ist und die Bremsen beider Fahrzeugseiten bei einer Bremspedalbetätigung ansprechen.

Gemäß einer bevorzugten Ausgestaltung der Erfindung gibt die Ventilanordnung grundsätzlich nur in der mittleren Stellung des Wippschalters einen Durchgang zwischen dem Bremszylinder und einer Leitung frei, durch die das Bremssystem eines an das Fahrzeug anhängbaren Geräts versorgt wird. Befindet sich der Wippschalter in seiner Mittelstellung, so werden bei Betätigung des Bremspedals sowohl alle Fahrzeugbetriebsbremsen als auch die Bremsen des angehängten Gerätes betätigt, während bei einer Auslenkstellung des Wippschalters lediglich die rechte oder linke Bremse des Schleppfahrzeuges, nicht jedoch die des Anhängers betätigbar ist.

Die erfindungsgemäße Bremsanlage ermöglicht eine elektrische Ansteuerung der Ventilanordnung, durch die bei Vorliegen eines elektrischen oder mechanischen Fehlers der Bauteile der Bremsanlage die Bremsen beider Fahrzeugseiten automatisch mit dem Bremszylinder verbunden sind, so daß bei Fehlern immer der Bremsmodus wirksam ist.

Vorzugsweise steuert der Wippschalter, wenn er sich in einer Auslenkstellung befindet, die Ventilanordnung derart an, daß die hydraulische Verbindung zwischen dem Bremszylinder und einer der Auslenkstellung zugeordneten Bremse auf einer Fahrzeugseite unterbrochen wird, so daß diese Bremse bei einer Bremspedalbetätigung nicht anspricht, sondern nur die Bremse auf der anderen Fahrzeugseite wirksam wird. Diese Funktion kann jedoch bei Überschreiten einer vorgebbaren Fahrgeschwindigkeit automatisch wirkungslos gemacht werden.

Es ist zweckmäßig, jeder der beiden Auslenkstellungen des Wippschalters ein Bremsrelais mit wenigstens einer zwischen einer Stromquelle und der Ventilanordnung liegenden Schaltstelle zuzuordnen. Bei stromführendem Bremsrelais ist die Schaltstelle geschlossen und verbindet die Ventilanordnung mit der Stromquelle, so daß ein Ventil zwischen dem Bremszylinder und der zugehörigen Bremse auf einer Fahrzeugseite geschlossen wird und hier keine Bremsbetätigung möglich ist.

Die Schaltstelle des Bremsrelais liegt zweckmäßigerweise in einem Selbsthaltekreis des Bremsrelais zwischen der Stromquelle und dem stromquellenseitigen Anschluß des Bremsrelais. Mit dem Bremspedal steht vorzugsweise eine elektrische Schaltstelle in Verbindung, die bei einer Pedalbetätigung anspricht und den Selbsthaltekreis unterbricht. Um bei höheren Fahrzeuggeschwindigkeiten eine automatische Umschaltung in den Bremsmodus zu gewährleisten, ist es von Vorteil, in den Selbsthaltekreis eine elektrische Schaltstelle anzuordnen, die mit einem Geschwindigkeitssensor in Verbindung steht und bei Überschreiten einer vorgebbaren Geschwindigkeit den Selbsthaltekreis öffnet. Zur Steuerung eines Anhängerbremsventils, welches zwischen dem Bremszylinder und einer an dem Fahrzeug montierten Hydrauliksteckdose zur Versorgung der Bremsleitung eines Anhängers angeordnet ist, ist es zweckmäßig wenn jedes Bremsrelais eine weitere Anhängerschaltstelle enthält, die das Anhängerbremsventil ansteuert.

Gemäß einer vorteilhaften Weiterbildung der Erfindung ist ein Pol eines Lenkwinkelhauptschalters an eine Stromquelle angeschlossen. Zwischen dem anderen Pol des Lenkwinkelhauptschalters und den jeder Bremse zugeordneten, stromlos offenen, elektromagnetisch gesteuerten Bremsventilen ist je ein durch wenigstens einen Lenkwinkelsensor betätigbarer Lenkwinkelschalter angeordnet, welcher bei Überschreiten eines vorgebbaren Lenkwinkels schließt.

Vorzugsweise enthält die erfindungsgemäße Bremsanlage einen gesonderten elektrischen Rückkopplungskreis, welcher ein optisches oder akustisches Signal abgibt, wenn nur eine Bremse betätigt ist bzw. ein elektrischer oder mechanischer Fehler vorliegt. Es kann somit angezeigt werden, daß der Lenkmodus eingestellt ist. Das Warnsignal kann auch bei mechanischen Fehlern der Magnetspule ausgelöst werden.

Durch die Integration der elektrischen Steuerung der Bremsanlage in eine anderen Zwecken dienende Bordelektronik lassen sich Herstellungskosten verringern.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Hydraulikdiagramm einer erfindungsgemäßen Bremsanlage und
- Fig. 2: einen elektrischen Schaltkreis zur Ansteuerung der in Fig. 1 gezeigten Magnetventile.

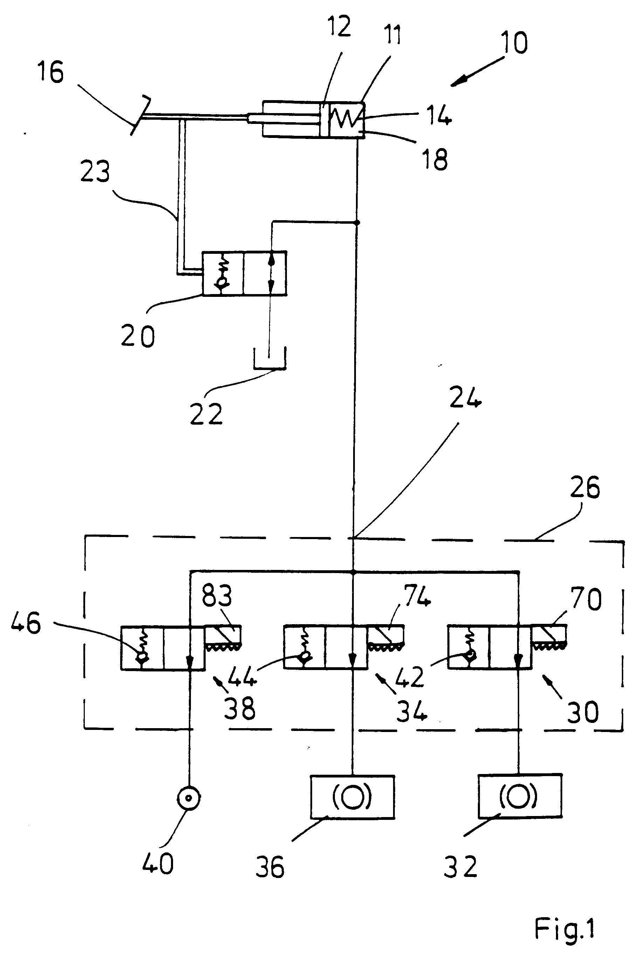

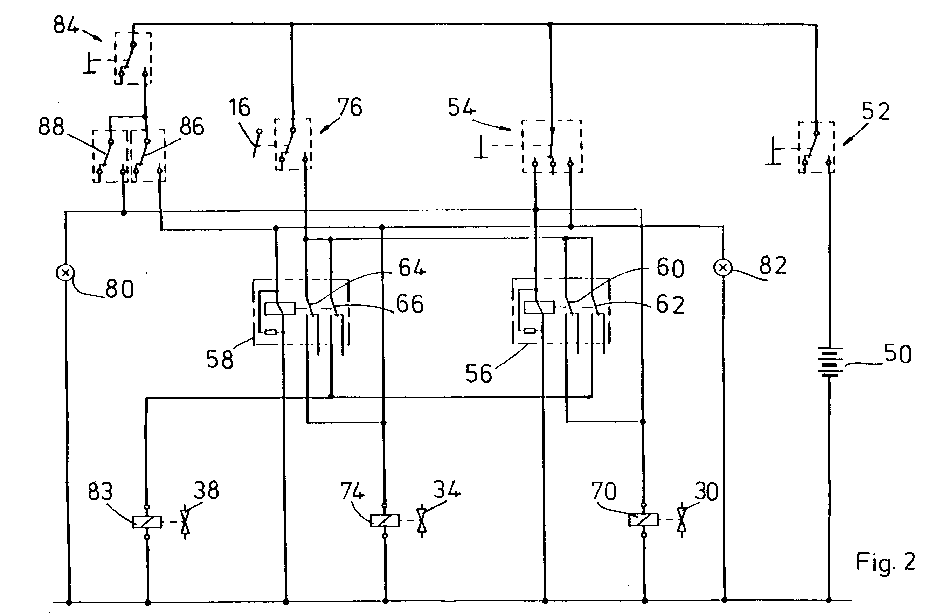

In dem Hydraulikdiagramm der Fig. 1 und dem Schaltkreis der Fig. 2 sind die für die vorliegende Erfindung erforderlichen Bauteile eingezeichnet, die im Bedarfsfalle durch weitere Ventile, Schalter etc. ergänzt werden können.

Das in Fig. 1 schematisch angedeutete Bremsventil 10 enthält einen hydraulischen Bremszylinder 11 mit einem Kolben 12, der durch ein Bremspedal 16 gegen die Kraft einer Feder 14 verschiebbar ist. Der von dem Kolben 12 eingeschlossene Zylinderraum 18 steht über ein Steuerventil 20 mit einem Behälter 22 für Bremsflüssigkeit in Verbindung. Das Steuerventil 20 ist über eine mechanische Verbindung 23 mit dem Bremspedal 16 gekoppelt. Es ist offen, wenn auf das Bremspedal 16 kein Druck ausgeübt wird, und der Kolben 12 infolge der Kraft der Feder 14 weitestgehend aus dem Hydraulikzylinder 11 herausgeschoben ist. Bei Betätigung des Bremspedals 16 wird das Steuerventil 20 geschlossen und ein Druck im Zylinderraum 18 aufgebaut, der an den Eingangsanschluß 24 eines Ventilgehäuses 26 ausgegeben wird.

Das Ventilgehäuse 26 nimmt eine Ventilanordnung mit drei elektromagnetisch betätigbaren 2/2-Wegeventilen auf, die stromlos offen sind. Es handelt sich um ein rechtes Bremsventil 30, welches mit einer rechten Betriebsbremse 32 des nicht näher dargestellten Fahrzeuges verbunden ist, ein linkes Bremsventil 34, welches mit einer linken Betriebsbremse 36 des Fahrzeuges verbunden ist, und ein Anhängerbremsventil 38, welches mit einer Hydrauliksteckdose 40 verbunden ist, an die eine Bremsleitung eines an das Fahrzeug anhängbaren, nicht dargestellten Anhängers ankuppelbar ist.

Die Wegeventile 30, 34 und 38 befinden sich in ihrer in Fig. 1 dargestellten Stellung in stromloser Ruhestellung und sind offen. In dieser Stellung stehen beide Betriebsbremsen 32 und 36 und die Hydrauliksteckdose 40 unmittelbar mit dem Zylinderraum 18 des Bremsventils 10 in Verbindung, so daß beim Niederdrücken des Bremspedals 16 die beiden Betriebsbremsen 32 und 36 sowie gegebenenfalls die Bremsen eines Anhängers ansprechen. Im Falle eines Stromausfalls geht die Bremsanordnung in ihre sichere Stellung über, in der die Wegeventile 30, 34, 38 offen sind und eine Bremsung aller Bremsen durch das Bremsventil 10 möglich ist.

Im Falle, daß an die Magnetspule 70, 74, 83 eines der Wegeventile 30, 34, 38 eine Stromquelle 50 angeschlossen ist, schaltet dieses in seine nicht dargestellte Stellung um, in der sein Durchgang durch ein Rückschlagventil 42, 44, 46 verschlossen wird. Das Rückschlagventil 42, 44, 46 ermöglicht zwar einen Druckausgleich von der Betriebsbremse 32, 36 oder der Hydrauliksteckdose 40 zum Bremsventil 10, nicht jedoch in umgekehrter Richtung. In der erregten Stellung des Wegeventils 30, 34, 38 ist eine Betätigung der zugehörigen Betriebsbremse 32, 36 oder gegebenenfalls der Anhängerbremse durch das Bremsventil 10 nicht möglich. Das wahlweise Sperren eines der Bremsventile 32, 36 macht es möglich, daß lediglich die Betriebsbremsen 32, 36 auf einer Fahrzeugseite betätigbar sind, wodurch das Lenken in Richtung dieser Seite erleichtert wird und ein kleinerer Wendekreis durchfahren werden kann.

Die Ansteuerung der Magnetspulen 70, 74, 83 der Wegeventile 30, 34, 38 erfolgt durch eine elektrische Schaltungsanordnung, wie sie beispielhaft in Fig. 2 dargestellt wurde. Die elektrische Schaltungsanordnung wird durch die Fahrzeugbatterie 50 mit Strom versorgt. Zur Fahrzeugbatterie 50 ist ein Fahrgeschwindigkeitsschalter 52 in Reihe geschaltet, der durch einen nicht dargestellten Fahrgeschwindigkeitssensor derart gesteuert wird, daß bei Überschreiten einer vorgebbaren Fahrgeschwindigkeit der Fahrgeschwindigkeitsschalter 52 öffnet und die übrige Schaltungsanordnung von der Batterie trennt. Bei hohen Fahrzeuggeschwindigkeiten sind damit die Wegeventile 30, 34, 38 stromlos und alle Bremsen wirksam.

Ein von Hand betätigbarer Wippschalter 54 hat drei Schaltstellungen. In seiner mittleren Ruhestellung, in die er durch die Kraft einer nicht dargestellten Feder gedrängt wird, ist der Wippschalter 54 offen. In jeder seiner beiden Auslenkstellungen, in die er durch Handbetätigung vorübergehend umschaltbar ist, schließt der Wippschalter 54 wahlweise ein rechtes Bremsrelais 56 oder ein linkes Bremsrelais 58 an die Fahrzeugbatterie 50 an. Dabei zieht das entsprechende Bremsrelais 56, 58 an und schließt seine beiden Schaltkontakte 60, 62; 64, 66.

Der erste Schaltkontakt 60 des rechten Bremsrelais 56 ist mit der Magnetspule 70 des rechten Bremsventils 30, und der erste Schaltkontakt 64 des linken Bremsrelais 58 ist mit der Magnetspule 74 des linken Bremsventils 34 verbunden. Beide ersten Schaltkontakte 60, 64 stehen ferner gemeinsam mit einem Bremspedalschalter 76 in Verbindung, der durch Niederdrücken des Bremspedals 16 aus seiner offenen in seine geschlossene Stellung umschaltbar ist. Damit wird das rechte Bremsventil 30 lediglich dann umgeschaltet und geschlossen, wenn die Fahrgeschwindigkeit nicht zu hoch ist (Fahrgeschwindigkeitsschalter 52 geschlossen), das Bremspedal 16 wenigstens teilweise niedergedrückt ist (Bremspedalschalter 76 geschlossen) und der Wippschalter 54 in seine linke Stellung gebracht wird, so daß das rechte Bremsrelais 56 anspricht und seinen ersten Schaltkontakt 60 schließt. Ferner wird in der linken Stellung des Wippschalters 54 eine linke Signallampe 80 in den Stromkreis geschaltet, deren Aufleuchten anzeigt, daß die Betriebsbremse 32 auf der rechten Fahrzeugseite unwirksam bleibt, so daß das Lenken um die linke Kurve unterstützt wird. Entsprechendes gilt für das Umschalten und Schließen des linken Bremsventils 34 durch Auslenken des Wippschalters 54 nach rechts sowie für eine Anzeige durch die rechte Signallampe 82.

Der erste Schaltkontakt 60, 64 dient darüberhinaus der Selbsthaltung des Bremsrelais 56, 58. Es verbindet im geschlossenen Zustand die Ausgangsleitung des Bremspedalschalters 76 mit der Eingangsseite des Bremsrelais 56, 58. Hat das Bremsrelais 56, 58 durch Schließen des Bremspedalschalters 76 und des Wippschalters 54 angezogen und den ersten Schaltkontakt 60, 64 geschlossen, so kann der Wippschalter 54 in seine mittlere Neutralstellung zurückkehren, ohne daß das Bremsrelais 56, 58 abfällt. Dieses öffnet seine Schaltkontakte 60, 62; 64, 66 erst dann wieder, wenn das Bremspedal 16 losgelassen wird und der Bremspedalschalter 76 öffnet.

Durch den jeweils zweiten Schaltkontakt 62, 66 der Bremsrelais 56, 58 läßt sich der Ausgang des Bremspedalschalters 76 mit der Magnetspule 83 des Anhängerbremsventils 38 verbinden. Dies hat zur Folge, daß immer dann, wenn eines der Bremsrelais 56, 58 anspricht und den zweiten Schaltkontakt 62, 66 schließt, das Anhängerbremsventil 38 geschlossen ist und die Anhängerbremsen nicht dem Bremsdruck ausgesetzt werden. Damit wird beim Eckenbremsen der Anhänger nicht abgebremst.

Neben einer Betätigung des Wippschalters 54 kann das Eckenbremsen auch durch Lenkwinkelsensoren ausgelöst werden. Zu diesem Zweck ist ein von Hand betätigbarer Lenkwinkelhauptschalter 84 vorgesehen, durch den die Bedienungsperson auswählen kann, ob bei Überschreiten vorgebbarer Lenkwinkel ein automatisches Eckenbremsen einsetzen soll. An den Lenkwinkelhauptschalter 84 sind ein rechter Lenkwinkelschalter 86 und ein linker Lenkwinkelschalter 88 zweier nicht näher dargestellter Lenkwinkelsensoren angeschlossen. Der rechte bzw. linke Lenkwinkelschalter 86, 88 ist dann geschlossen, wenn der rechte bzw. linke Lenkeinschlag vorgebbare Werte übersteigt. Der rechte Lenkwinkelschalter 86 ist unmittelbar an die Magnetspule 74 des linken Bremsventils 34, und der linke Lenkwinkelschalter 88 ist unmittelbar an die Magnetspule 70 des rechten Bremsventils 30 angeschlossen. Bei niedrigen Fahrgeschwindigkeiten (Fahrgeschwindigkeitsschalter 52 geschlossen) sowie bei geschlossenem Lenkwinkelhauptschalter 84 und ausreichendem Lenkwinkeleinschlag nach rechts (Lenkwinkelschalter 86 geschlossen) wird das linke Bremsventil 34 geschlossen und macht die linke Betriebsbremse 36 unwirksam. Gleichzeitig leuchtet die rechte Signallampe 82 auf. Bei einem ausreichenden Lenkwinkel nach links wird entsprechend die rechte Betriebsbremse 32 wirkungslos und die linke Signallampe 80 leuchtet auf.

Der Ausgang des rechten Lenkwinkelschalters 86 ist ferner an das linke Bremsrelais 58, und der Ausgang des linken Lenkwinkelschalters 88 ist an das rechte Bremsrelais 56 angeschlossen. Damit zieht bei einem lenkwinkelabhängigen Eckenbremsen das entsprechende Bremsrelais 56, 58 an, schließt den zugehörigen zweiten Schaltkontakt 62, 66, schließt das Anhängerbremsventil 38 und trennt damit die Hydrauliksteckdose 40 von der Bremsdruckversorgung. Damit wird auch beim lenkwinkelabhängigen Eckenbremsen der Anhänger nicht gebremst.

Auch wenn die Erfindung lediglich anhand einiger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die im Rahmen der Ansprüche unter die vorliegende Erfindung fallen. So kann beispielsweise ein von den Bremsrelais unabhängiger Überwachungskreis vorgesehen werden, durch den eine optische Überwachung der mechanischen Position der Magnetspulen möglich ist. Ist eine Magnetspule verschoben, um das zugehörige Bremsventil zu schließen, so leuchtet eine entsprechende Anzeigelampe, die sich auf dem Bedienungspult des Fahrzeuges befinden kann, auf. Dies ermöglicht eine Überwachung auf mechanische Fehler. Wird hierbei zusätzlich eine vorgebbare Fahrgeschwindigkeit überschritten, so kann ein zusätzliches Warnsignal auf die besondere Gefahrenquelle hinweisen.

## Patentansprüche

1. Bremsanlage für ein Motorfahrzeug zur wahlweisen Einzel- oder Mehrradbremsung mit einem durch ein Bremspedal (16) betätigbaren hydraulischen Bremszylinder (11), der mittels einer elektrisch betätigbaren Ventilanordnung (26) den hydraulisch betätigbaren Bremsen (32, 36) der einen und/oder der anderen Fahrzeugseite zugeordnet werden, und mit einer elektrischen Schaltungsvorrichtung, die einen von Hand betätigbaren, aus einer mittleren Stellung in zwei Auslenkstellungen schaltbaren Schalter zur Ansteuerung der Ventilanordnung (26) enthält, um den Bremszylinder (11) wahlweise mit den Bremsen (32, 36) beider Fahrzeugseiten (Bremsmodus) oder entweder mit wenigstens einer Bremse (32) der rechten oder mit wenigstens einer Bremse (36) der linken Fahrzeugseite (Lenkmodus) zu verbinden, dadurch gekennzeichnet, daß der Schalter ein federzentrierter Wippschalter (54) ist, daß ein die Schaltvorrichtung steuernder Bremspedalschalter (76) vorgesehen ist, wobei durch gleichzeitige Betätigung des Wippschalters (54) und des Bremspedalschalters (76) ein Lenkmodus aktivierbar ist, und daß die Schaltungsvorrichtung einen Haltekreis enthält, der nach Beendigung einer Betätigung des Wippschalters (54) erst dann vom Lenkmodus in einen Bremsmodus umschaltet, in dem eine Verbindungen zwischen dem Bremszylinder (11) und den Bremsen (32, 36) beider Fahrzeugseiten hergestellt wird, wenn das Bremspedal (16) über einen vorgebbaren Schaltpunkt der Schaltstelle (76) hinaus gelöst wird.

2. Bremsanlage nach Anspruch 1, dadurch gekennzeichnet, daß wenigstens ein Lenkwinkelsensor (86, 88) und ein Lenkbremsenumschalter (84) vorgesehen sind, und daß die Schaltungsvorrichtung bei eingeschaltetem Lenkbremsenumschalter (84) die Verbindung zwischen dem Bremszylinder (11) und den Bremsen (32, 36) einer Fahrzeugseite automatisch unterbricht, wenn ein vorgegebener Lenkwinkel überschritten ist.

3. Bremsanlage nach Anspruch 1 oder 2, dadurch gekennzeichnet, daß ein Geschwindigkeitssensor (52) vorgesehen ist, und daß die Schaltungsvorrichtung bei Überschreiten einer vorgebbaren Fahrzeuggeschwindigkeit automatisch die Bremsen (32, 36) beider Fahrzeugseiten mit dem Bremszylinder (11) verbindet.

4. Bremsanlage nach einem der Ansprüche 1 bis 3, dadurch gekennzeichnet, daß die Ventilanordnung (26) grundsätzlich nur in der mittleren Stellung des Wippschalters (54) einen Durchgang zwischen dem Bremszylinder (11) und einer Leitung frei gibt, die das Bremssystem (40) eines an das Fahrzeug anhängbaren Geräts versorgt.

5. Bremsanlage nach einem der Ansprüche 1 bis 4, dadurch gekennzeichnet, daß die Ventilanordnung (26) derart angesteuert wird, daß bei Vorliegen eines elektrischen oder mechanischen Fehlers der Bremsanlage die Bremsen (32, 36) beider Fahrzeugseiten und gegebenenfalls eines an das Fahrzeug anhängbaren Geräts automatisch mit dem Bremszylinder (11) verbunden sind.

6. Bremsanlage nach einem der Ansprüche 1 bis 5, dadurch gekennzeichnet, daß der Wippschalter (54) in jeder seiner Auslenkstellungen die Ventilanordnung (26) ansteuert, um die hydraulische Verbindung zwischen dem Bremszylinder (11) und einer der Auslenkstellung zugeordneten Bremse (32, 36) zu unterbrechen.

7. Bremsanlage nach einem der Ansprüche 1 bis 6, dadurch gekennzeichnet, daß jeder Auslenkstellung des Wippschalters (54) ein Bremsrelais (56, 58) mit wenigstens einer zwischen einer Stromquelle (50) und der Ventilanordnung (26) liegenden Schaltstelle (60, 64) zugeordnet ist.

8. Bremsanlage nach Anspruch 7, dadurch gekennzeichnet, daß bei stromführendem Bremsrelais (56, 58) die Schaltstelle (60, 64) geschlossen ist und die Ventilanordnung (26) derart mit der Stromquelle (50) verbindet, daß die hydraulische Verbindung zwischen dem Bremszylinder (11) und einer zugehörigen Bremse (32, 36) unterbrochen wird.

9. Bremsanlage nach Anspruch 7 oder 8, dadurch gekennzeichnet, daß die Schaltstelle (60, 64) des Bremsrelais (56, 58) in einem Selbsthaltekreis des Bremsrelais (56, 58) zwischen der Stromquelle (50) und dem stromquellenseitigen Anschluß des Bremsrelais (56, 58) liegt.

10. Bremsanlage nach Anspruch 9, dadurch gekennzeichnet, daß mit dem Bremspedal (16) eine elektrische Schaltstelle (76) in Verbindung steht, die bei einer Pedalbetätigung anspricht und den Selbsthaltekreis unterbricht.

11. Bremsanlage nach Anspruch 9 oder 10, dadurch gekennzeichnet, daß in dem Selbsthaltekreis eine elektrische Schaltstelle (52) angeordnet ist, die mit einem Geschwindigkeitssensor in Verbindung steht und bei Überschreiten einer vorgebbaren Geschwindigkeit öffnet.

12. Bremsanlage nach einem der Ansprüche 7 bis 11, dadurch gekennzeichnet, daß jedes Bremsrelais (56, 58) eine weitere Anhängerschaltstelle (62, 66) enthält, die ein Anhängerbremsventil (38) ansteuert.

13. Bremsanlage nach einem der Ansprüche 1 bis 12, dadurch gekennzeichnet, daß an eine Stromquelle (50) ein Pol eines Lenkwinkelhauptschalters (84) angeschlossen ist, zwischen dessen anderem Pol und den jeder Bremse (32, 36) zugeordneten, stromlos offenen, elektromagnetisch gesteuerten Bremsventilen (30, 34) je ein durch wenigstens einen Lenkwinkelsensor betätigbarer Lenkwinkelschalter (86, 88) angeordnet ist, welcher bei Überschreiten eines vorgebbaren Lenkwinkels schließt.

14. Bremsanlage nach einem der Ansprüche 1 bis 13, dadurch gekennzeichnet, daß eine Warneinrichtung (80, 82) vorgesehen ist, die im Falle, daß nicht alle Bremsen (32, 36, 40) betätigbar sind, ein optisches oder akustisches Signal ausgibt.

15. Bremsanlage nach einem der Ansprüche 1 bis 14, dadurch gekennzeichnet, daß die elektrische Steuerung der Bremsanlage in eine anderen Zwecken dienende Bordelektronik integriert ist.

16. Bremsanlage nach einem der Ansprüche 1 bis 15, dadurch gekennzeichnet, daß bei einem Arbeitsfahrzeug, beispielsweise bei einem Ackerschlepper, der Wippschalter (54) im Bereich der Bedienungskonsole, die sich rechts neben dem Fahrersitz befindet, angeordnet ist.

17. Bremsanlage nach einem der Ansprüche 1 bis 16, dadurch gekennzeichnet, daß der Wippschalter (54) am Steuerhebel für das Fahrzeuggetriebe oder im Bereich einer Armlehne des Fahrersitzes angeordnet ist.

## Claims

1. A brake system for a motor vehicle for selectively braking single or multiple wheels, with a hydraulic brake cylinder (11) operable by a brake pedal (16) and which is associated with the hydraulically actuated brakes (32, 36) of the one and/or the other side of the vehicle by means of an electrically operated valve arrangement (26), and with an electrical switching arrangement which includes a manually operable switch, which can be switched from a central position into two deflected positions for controlling the valve arrangement (26), in order to connect the brake cylinder (11) selectively to the brakes (32, 36) on both sides of the vehicle (braking mode) or either with at least one brake (32) on the right side or at least one brake (36) of the left side of the vehicle (steering mode), characterized in that the switch is a spring centred rocker switch (54), in that there is provided a brake pedal switch (76) controlling the switching arrangement, wherein a steering mode can be activated by simultaneous actuation of the rocker switch (54) and the brake pedal switch (76), and in that the switching arrangement includes a hold circuit which, on completion of an actuation of the rocker switch (54) only switches from the steering mode into a braking mode, in which a connection is made between the brake cylinder (11) and the brakes (32, 36) on both sides of the vehicle, when the brake pedal (16) is relaxed past a predetermined switching point of the switch contact (76).

2. A brake system according to claim 1, characterized in that at least one steering angle sensor (86, 88) and a steering brake switch (84) are provided and in that the switching arrangement automatically cuts out the brakes (32, 36) on one side of the vehicle when the steering brake switch (84) is on and when a predetermined steering angle is exceeded.

3. A brake system according to claim 1 or 2, characterized in that a speed sensor (52) is provided and in that the switching arrangement automatically connects the brakes (32, 36) on both sides of the vehicle to the brake cylinder (11) on exceeding a predetermined vehicle speed.

4. A brake system according to any of claims 1 to 3, characterized in that the valve arrangement (26) opens a passage between the brake cylinder (11) and a line which supplies the brake system (40) of an implement towed by the vehicle fundamentally only in the central position of the rocker switch (54).

5. A brake system according to any of claims 1 to 4, characterized in that the valve arrangement (26) is so controlled that the brakes (32, 36) on both sides of the vehicle and if present of an implement towed by the vehicle are automatically connected to the brake cylinder (11) in the presence of an electrical or mechanical fault of the brake system.

6. A brake system according to any of claims 1 to 5, characterized in that the rocker switch (54) controls the valve arrangement (26) in each of its deflected positions so as to interrupt the hydraulic connection between the brake cylinder (11) and a brake (32, 36) associated with the deflected position.

7. A brake system according to any of claims 1 to 6, characterized in that a brake relay (56, 58) with at least one switch contact (60, 64) between a current source (50) and the valve arrangement (26) is associated with each deflected position of the rocker switch (54).

8. A brake system according to claim 7, characterized in that when a brake relay (56, 58) is carrying current, the switch contact (60, 64) is closed and the valve arrangement (26) is so connected to the current source (50) that the hydraulic connection between the brake cylinder (11) and an associated brake (32, 36) is interrupted.

9. A brake system according to claim 7 or 8, characterized in that the switch contact (60, 64) of the brake relay (56, 58) lies in a self-hold circuit of the brake relay (56, 58) between the current source (50) and the terminal of the brake relay (56, 58) on the current source side.

10. A brake system according to claim 9, characterized in that an electric switch contact (76) is connected to the brake pedal (16) which responds on a pedal actuation and interrupts the self-hold circuit.

11. A brake system according to claim 9 or 10, characterized in that an electric switch contact (52) is arranged in the self-hold circuit and is connected to a speed sensor and opens on exceeding a predetermined speed.

12. A brake system according to any of claims 7 to 11, characterized in that each brake relay (56, 58) includes a further trailer switch contact (62, 66) which controls a trailer brake valve (38).

13. A brake system according to any of claims 1 to 12, characterized in that one pole of a steering angle main switch (84) is connected to a current source (50) and a steering angle switch (86, 88) operated by at least one steering angle sensor is arranged between its other pole and each of the electromagnetically controlled brake valves (30, 34) associated with the brakes (32, 36) respectively and which are open when carrying no current, each steering angle switch closing on exceeding a predetermined steering angle.

14. A brake system according to any of claims 1 to 13, characterized in that a warning device (80, 82) is provided and in the event that not all brakes (32, 36, 40) are operable, issues an optical or acoustic signal.

15. A brake system according to any of claims 1 to 14, characterized in that the electrical control of the brake system is integrated in on-board electronics serving another purpose.

16. A brake system according to any of claims 1 to 15, characterized in that in the case of an industrial vehicle, for example an agricultural tractor, the rocker switch (54) is arranged in the region of the operator console located to the right, beside the driver's seat.

17. A brake system according to any of claims 1 to 16, characterized in that the rocker switch (54) is arranged on the control lever for the vehicle transmission or in the region of an armrest of the driver's seat.

## Revendications

1. Installation de freinage pour un véhicule automobile pour le freinage à volonté à niveau haut d'une roue individuelle ou de plusieurs roues, comportant un cylindre de frein hydraulique (11), qui peut être actionné par une pédale de frein (16) et qui est associé, au moyen d'un dispositif à soupape (26) pouvant être actionné électriquement, aux freins (32,36) pouvant être actionnés par voie hydraulique d'un côté et/ou de l'autre côté du véhicule, et comportant un montage électrique, qui contient un interrupteur, qui peut être actionné manuellement et peut être commuté depuis une position médiane dans deux positions déviées et sert à commander le dispositif à soupape (26) de manière à relier le cylindre de frein (11) au choix aux freins (32,36) des deux côtés du véhicule (mode de freinage) ou à au moins un frein (32) du côté droit du véhicule ou à au moins un frein (36) du côté gauche du véhicule (mode de braquage), caractérisée en ce que l'interrupteur est un interrupteur à bascule (54) centré au moyen d'un ressort, qu'il est prévu un interrupteur (76) de la pédale de frein, qui commande le dispositif de commutation, un mode de braquage pouvant être activé au moyen de l'actionnement simultané de l'interrupteur à bascule (54) et de l'interrupteur (76) de la pédale de frein, et que le montage contient un circuit de blocage qui, à la fin d'un actionnement de l'interrupteur à bascule (54), exécute une commutation du mode de braquage à un mode de freinage, dans lequel une liaison est établie entre le signal de frein (11) et les freins (32,36) des deux côtés du véhicule, uniquement lorsque la pédale de frein (16) est relâchée au-delà d'un point de commutation pouvant être prédéterminé de l'arbre de commutation (76).

2. Installation de freinage selon la revendication 1, caractérisée en ce qu'il est prévu au moins un capteur (86,88) de l'angle de braquage et un commutateur (84) du frein de direction, et que lorsque le commutateur (84) du frein de direction est activé, le montage interrompt automatiquement la liaison entre le cylindre de frein (11) et les freins (32,36) d'un coté du véhicule, lorsqu'un angle de braquage prédéterminé est dépasse.

3. Installation de freinage selon la revendication 1 ou 2, caractérisée en ce qu'il est prévu un capteur de vitesse (52) et que lors du dépassement d'une vitesse pouvant être prédéterminée du véhicule, le montage relie automatiquement les freins (32,36) des deux côtés du véhicule au cylindre de frein (11).

4. Installation de freinage selon l'une des revendications 1 à 3, caractérisée en ce que le dispositif à soupape (26) libère, en principe uniquement lorsque l'interrupteur à bascule (54) est dans la position centrale, un passage entre le cylindre de frein (11) et une canalisation, qui alimente le système de freinage (40) d'un appareil pouvant être attelé au véhicule.

5. Installation de freinage selon l'une des revendications 1 à 4, caractérisée en ce que le dispositif à soupape (26) est commandé de telle sorte que, dans le cas de la présence d'un défaut électrique ou mécanique de l'installation de freinage, les freins (32,36) des deux côtés du véhicule et éventuellement d'un appareil pouvant être attelé au véhicule sont reliés automatiquement au cylindre de frein (11).

6. Installation de freinage selon l'une des revendications 1 à 5, caractérisée en ce que, dans chacune de ses positions déviées, l'interrupteur à bascule (54) commande le dispositif à soupape (26) de manière à interrompre la liaison hydraulique entre le cylindre de frein (11) et un frein (32,36) associé à la position déviée.

7. Installation de freinage selon l'une des revendications 1 à 6, caractérisée en ce qu'à chaque position déviée de l'interrupteur à bascule (54) est associé un relais de frein (56,58) comportant au moins un poste de commutation (60,64) qui est situé entre une source de courant (50) et le dispositif à soupape (26).

8. Installation de freinage selon la revendication 7, caractérisée en ce que dans le cas où le relais de frein (56,58) transmet un courant, le poste de commutation (60,64) est fermé et le dispositif à soupape (26) à la source de courant (50) de telle sorte que la liaison hydraulique entre le cylindre de frein (11) et un frein associé (32,36) est interrompue.

9. Installation de freinage selon la revendication 7 ou 8, caractérisée en ce que le poste de commutation (60,64) du relais de frein (56,58) est situé dans un circuit d'auto-maintien du relais de frein (56,58) entre la source de courant (50) et le raccord et la borne, situés du côté de la source de courant, du relais de frein (56,58).

10. Installation de freinage selon la revendication 9, caractérisée en ce qu'à la pédale de frein (16) est relié un poste de commutation électrique (76), qui répond lors d'un actionnement de la pédale et interrompt le circuit d' auto-maintien.

11. Installation de freinage selon la revendication 9 ou 10, caractérisée en ce que dans le circuit d'auto-maintien est disposé un poste de commutation électrique (52), qui est relié à un capteur de vitesse et qui l'ouvre, lors du dépassement d'une vitesse pouvant être prédéterminée.

12. Installation de freinage selon l'une des revendications 7 à 11, caractérisée en ce que chaque relais de frein (56,58) contient un autre poste de commutation (62,66) pour remorque, qui commande une soupape de frein (38) d'une remorque.

13. Installation de freinage selon l'une des revendications 1 à 12, caractérisée en ce qu'à une source de courant (50) est connecté un pôle d'un interrupteur principal (84) de freinage de direction, et qu'entre son autre pôle et les soupapes de freins (30,34) qui sont associées à chaque frein (32,36), sont ouvertes en l'absence de courant et sont commandées par voie électromagnétique, est disposé respectivement un interrupteur (86,88) pour l'angle de braquage, qui peut être actionné par au moins un capteur de l'angle de braquage et qui se ferme lors du dépassement d'un angle de braquage pouvant être prédétermine.

14. Installation de freinage selon l'une des revendications 1 à 13, caractérisée en ce qu'il est prévu un dispositif d'avertissement (80,82) qui, dans le cas ou tous les freins (32,36,40) ne peuvent pas être actionnés, délivre un signal optique ou acoustique.

15. Installation de freinage selon l'une des revendications 1 à 14, caractérisée en ce que la commande électrique de l'installation de freinage est intégrée dans un système électronique de bord utilisé dans d'autres buts.

16. Installation de freinage selon l'une des revendications 1 à 15, caractérisée en ce que dans le cas d'un véhicule de travail, par exemple dans le cas d'un tracteur agricole, l'interrupteur à bascule (54) est disposé au niveau de la console de commande, qui est située à droite à côté du siège du conducteur.

17. Installation de freinage selon l'une des revendications 1 à 16, caractérisée en ce que l'interrupteur à bascule (54) est disposé sur le levier de commande pour la transmission du véhicule ou au niveau d'un appui-bras du siège du conducteur.
